# EUROPEAN PATENT APPLICATION

(11) **EP 4 628 372 A1**
(43) Date of publication of application: **08.10.2025**
(21) Application number: 25154329.4
(22) Date of filing: 28.01.2025
(51) Int. Cl.: B60T 8/40

(54) **PEDAL SIMULATOR OF VEHICLE**

(30) Priority: 03.04.2024 KR 20240045293
(71) Applicant: Hyundai Mobis Co., Ltd., Gangnam-gu Seoul 06141 (KR)
(72) Inventor: KIM, Jin Hyun, 16891 Yongin-si, Gyeonggi-do (KR); CHA, Myeon Gyu, 16891 Yongin-si, Gyeonggi-do (KR)
(74) Representative: Jung, Minkyu

(57) **Abstract**

A pedal simulator (1) for a vehicle includes a housing portion (100), a piston portion (200) slidably positioned in the housing portion, an elastic portion (300) configured to elastically support the piston portion inside the housing portion, a damper portion (400) provided in the piston portion and configured to be elastically deformable according to movement of the piston portion, and a cushioning member (500) provided in the housing portion, positioned to face the damper portion, and compressed by pressure of the damper portion.

## Description

### BACKGROUND

### FIELD

Exemplary embodiments of the present disclosure relate to a pedal simulator of a vehicle, and more particularly, to a pedal simulator of a vehicle, which is capable of providing brake feel.

### DESCRIPTION OF THE RELATED ART

In general, electronic brakes incorporate hydraulic systems. With the recent emergence of electronic brake systems (brake-by-wire systems) and technologies related to autonomous vehicles, there is a growing demand for the development of non-hydraulic brake systems.

A pedal simulator is a component mounted on an electro-mechanical brake (EMB) or a vacuum-independent electronic booster (VEB) that provides a driver with brake feel generated by conventional mechanical (hydraulic) brakes.

Conventional pedal simulators use springs, dampers, and other components to provide the brake feel similar to that of a hydraulic booster. The hydraulic booster shows a pattern of smooth increase in pedal force without inflection points throughout all braking stages. However, the conventional pedal simulator has an issue of creating an inconsistent feel during the transition from the spring compression stage to the damper compression stage. This may be noticed by a driver as an inconsistent brake feel. Therefore, these issues require improvement.

The related art of the present disclosure is disclosed in Korean Patent No. 10-2223847 (registered on March 8, 2021 and entitled "PEDAL SIMULATOR").

### SUMMARY

Various embodiments of the present disclosure are directed to providing a pedal simulator of a vehicle capable of eliminating an inconsistent brake feel during the transition from an elastic portion compression stage to a damper portion compression stage.

In addition, the embodiments of the present disclosure are directed to providing a pedal simulator of a vehicle that may be applied regardless of the type and shape of the pedal.

A pedal simulator of a vehicle according to the present disclosure includes a housing portion, a piston portion slidably positioned in the housing portion, an elastic portion configured to elastically support the piston portion inside the housing portion, a damper portion provided in the piston portion and configured to be elastically deformable according to movement of the piston portion, and a cushioning member provided in the housing portion, positioned to face the damper portion, and compressed by pressure of the damper portion.

The piston portion may include a piston body portion positioned inside the housing portion and configured to have a ball portion, a piston pressing portion provided on one side of the piston body portion and configured to have a socket portion pivotably coupled to the ball portion, and a piston rod portion provided on the opposite side of the piston body portion and configured to have the damper portion mounted.

The piston rod portion may have an opening portion at an end portion at one side and be formed in a hollow shape, and the damper portion may be accommodated in the piston rod portion.

The housing portion may include a hollow portion wherein the piston portion is movably accommodated, a solid portion provided on one side of the hollow portion, configured to have the cushioning member coupled, and to support the damper portion, allowing the damper portion to be compressed by pressure of the piston portion, and a guide portion formed outside of the solid portion, configured to communicate with the hollow portion, and to have the piston rod portion inserted.

The cushioning member may include an elastically deformable material.

The damper portion and the cushioning member may have different hardnesses.

The piston body portion may have a larger diameter than the piston rod portion.

The elastic portion may come into contact with an inner surface of the hollow portion on one side, come into contact with an outer surface of the piston body portion on the opposite side, and provide an elastic force to the piston body portion.

The housing portion may have a slit hole portion, and further include a retainer portion configured to pass through the slit hole portion, be coupled to the housing portion, and interfere with the piston pressing portion to prevent the piston portion from separating.

The retainer portion may be formed in a ring shape with one side open.

The piston portion may further include a magnet portion provided on an outer circumferential surface of the piston body portion and formed along a circumferential direction of the piston body portion.

The pedal simulator of a vehicle may further include a sensor portion provided in the housing portion and configured to sense a position of the magnet portion.

A pedal simulator of a vehicle includes a housing portion detachably coupled to a pedal portion, a piston portion slidably positioned in the housing portion, an elastic portion configured to elastically support the piston portion inside the housing portion, a damper portion provided in the piston portion and configured to be elastically deformable according to movement of the piston portion, and a cushioning member provided in the housing portion, positioned to face the damper portion, and compressed by pressure of the damper portion.

The pedal simulator of a vehicle may further include a bracket portion provided in the housing portion and coupled to the pedal portion.

A plurality of the bracket portions may be spaced apart on an outer surface of the housing portion.

The pedal simulator of a vehicle improves the inconsistent brake feel during the transition from the elastic portion compression stage to the damper portion compression stage through the cushioning member, which is compressed by the pressure of the damper portion, thus ensuring a smooth brake feel.

The pedal simulator of a vehicle may adjust pedal force based on the density and thickness of the cushioning member.

The pedal simulator of a vehicle enables standardization across various types of pedal portions through modularization that can be applied regardless of the type and shape of the pedal portion, thereby reducing repair and replacement costs of the pedal simulator and improving productivity.

The pedal simulator of a vehicle may eliminate the need for a pedal return spring, as the elastic portion elastically supports the piston portion.

The pedal simulator of a vehicle is capable of measuring a pedal stroke using the magnet portion, which is integrally provided on the piston portion.

In addition, the pedal simulator of a vehicle may adjust pedal force based on the length, outer diameter, and hardness of the housing portion, elastic portion, and damper portion.

### BRIEF DESCRIPTION OF THE DRAWINGS

FIG. 1 is a perspective view showing a pedal simulator of a vehicle mounted on a pendant-type pedal portion according to an embodiment of the present disclosure.
FIG. 2 is an external perspective view of a pedal simulator of a vehicle, viewed from a direction according to an embodiment of the present disclosure.
FIG. 3 is an external perspective view of the pedal simulator of a vehicle of FIG. 2, viewed from a different direction.
FIG. 4 is an exploded perspective view of a pedal simulator of a vehicle, viewed from a direction according to an embodiment of the present disclosure.
FIG. 5 is an exploded perspective view of the pedal simulator of a vehicle of FIG. 4, viewed from a different direction.
FIG. 6 is a side cross-sectional view showing a pedal simulator of a vehicle according to an embodiment of the present disclosure.
FIG. 7 is an operational cross-sectional view showing an initial braking of a pedal simulator of a vehicle according to an embodiment of the present disclosure.
FIG. 8 is an operational cross-sectional view showing a mid-to-late braking of a pedal simulator of a vehicle according to an embodiment of the present disclosure.

### DETAILED DESCRIPTION

Hereinafter, a pedal simulator of a vehicle will be described below with reference to the accompanying drawings through various exemplary embodiments of the present disclosure. In this process, the thickness of lines and the size of elements illustrated in the drawing may be exaggerated for clarity and convenience of description. In addition, the terms used below are defined in consideration of the functions thereof in the present disclosure and may vary depending on the intention of a user or an operator or common practice. Therefore, these terms should be contextually defined in light of the present specification.

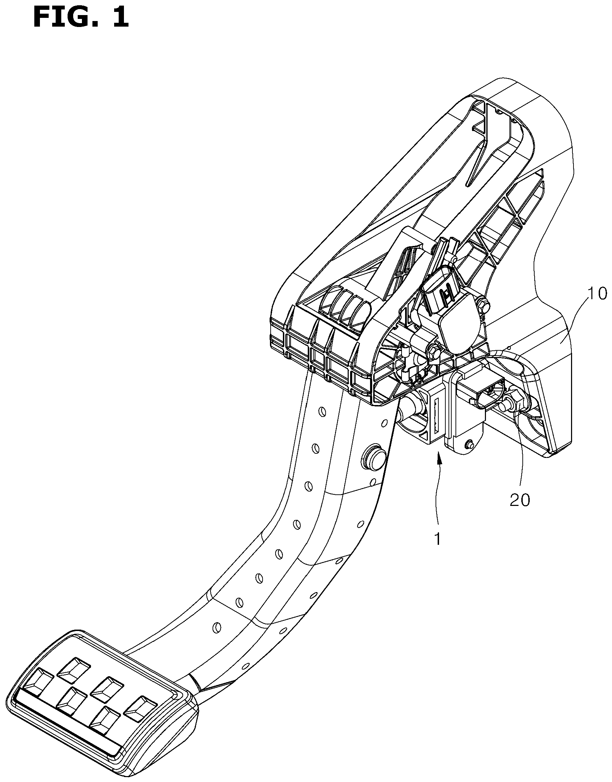

FIG. 1 is a perspective view showing a pedal simulator of a vehicle mounted on a pendant-type pedal portion according to an embodiment of the present disclosure.

Referring to FIG. 1, a pedal simulator 1 of a vehicle according to an embodiment of the present disclosure may be detachably mounted regardless of the type and shape of a pedal portion 10 such as a pendant-type pedal portion and an organ-type pedal portion. Accordingly, the pedal simulator 1 of a vehicle according to the embodiment of the present disclosure may be modularized, easily assembled, and mounted onto the pedal portion 10 such as a pendant type pedal portion and an organ type pedal portion, thereby enabling product standardization.

The pedal simulator 1 according to an embodiment of the present disclosure may be configured such that a bracket portion 150 provided on the housing portion 100 is coupled to a pendant-type pedal portion or organ-type pedal portion using a coupling member 20 such as a bolt and nut, which allows for easy assembly.

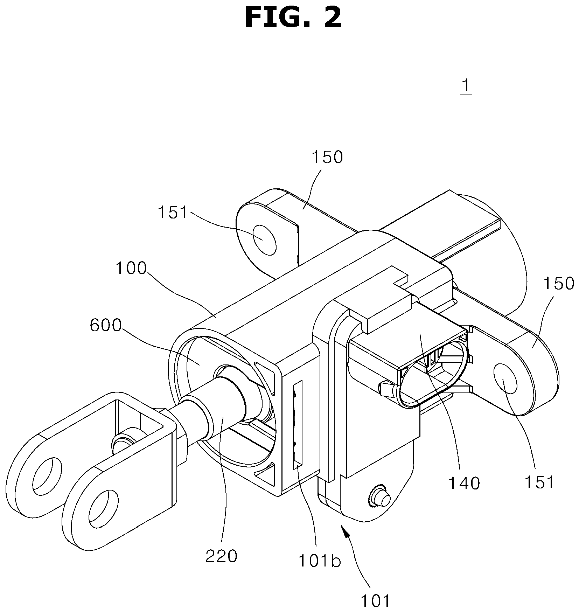

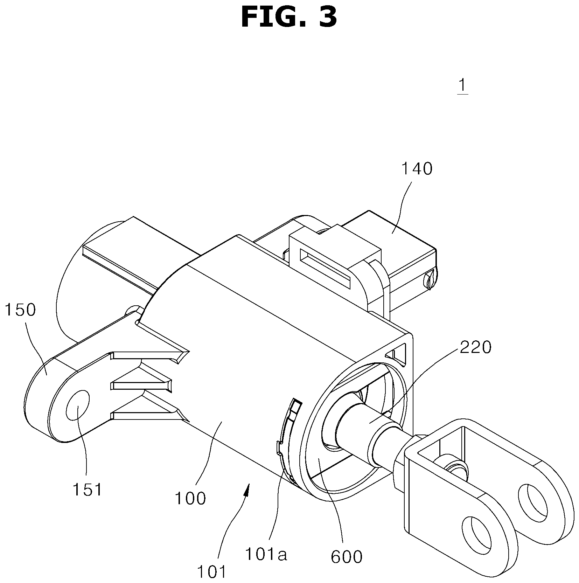

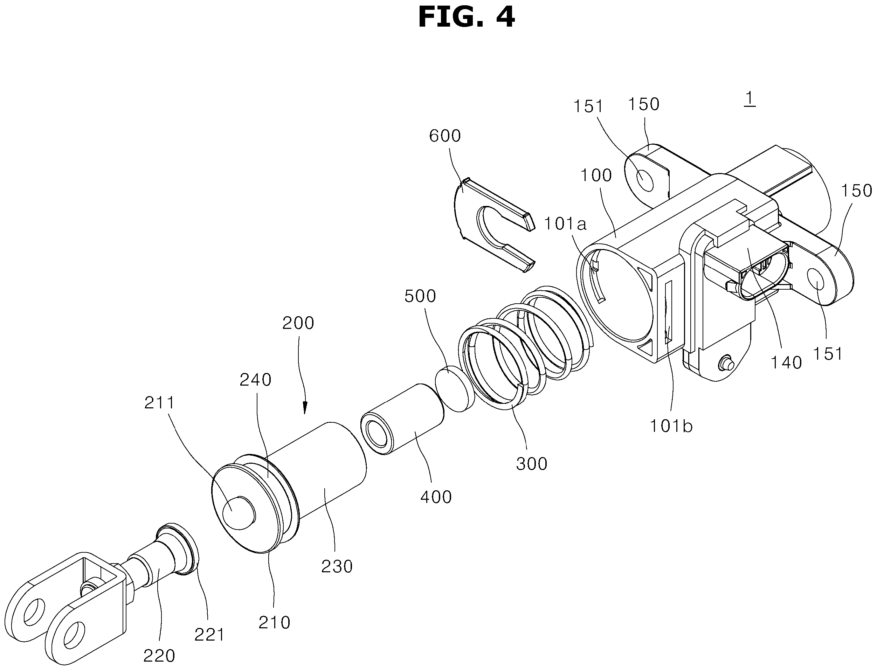

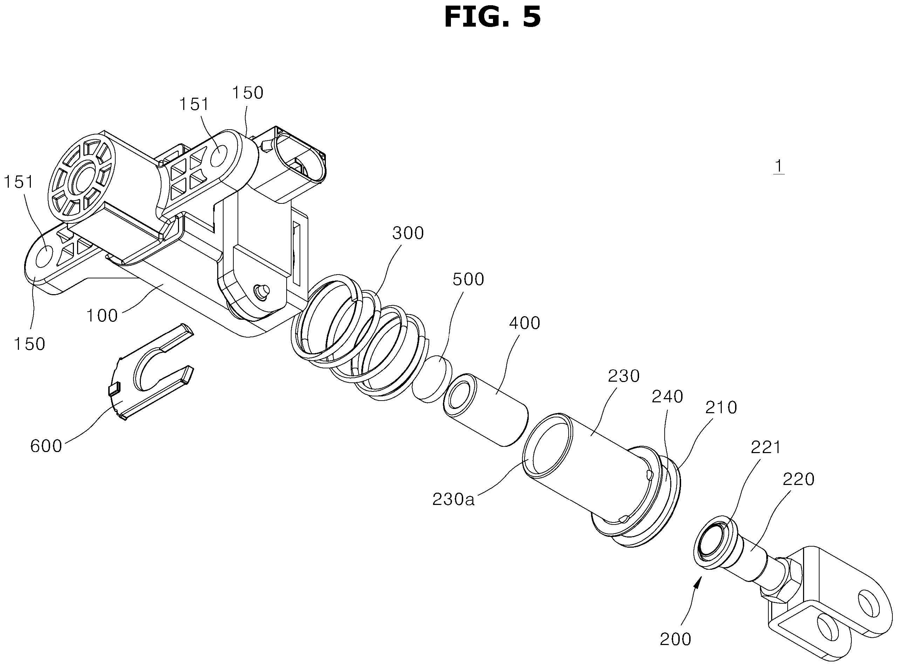

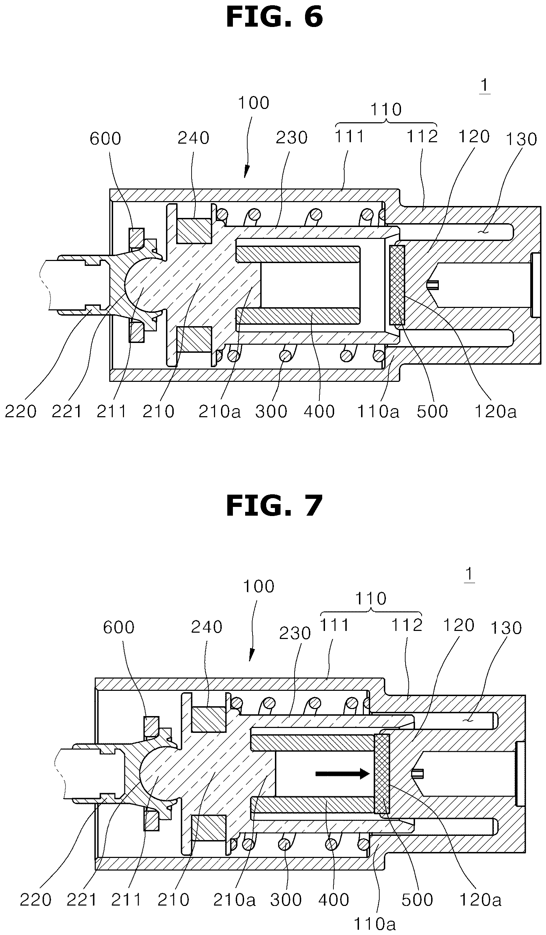

FIG. 2 is an external perspective view of a pedal simulator of a vehicle, viewed from a direction according to an embodiment of the present disclosure. FIG. 3 is an external perspective view of the pedal simulator of a vehicle of FIG. 2, viewed from a different direction. FIG. 4 is an exploded perspective view of a pedal simulator of a vehicle, viewed from a direction according to an embodiment of the present disclosure. FIG. 5 is an exploded perspective view of the pedal simulator of a vehicle of FIG. 4, viewed from a different direction. FIG. 6 is a side cross-sectional view showing a pedal simulator of a vehicle according to an embodiment of the present disclosure.

Referring to FIGS. 2 to 6, the pedal simulator 1 of a vehicle according to an embodiment of the present disclosure includes a housing portion 100, a piston portion 200, an elastic portion 300, a damper portion 400, and a cushioning member 500, which will be described in detail as follows.

The housing portion 100 may include a hollow portion 110, a solid portion 120, and a guide portion 130.

The hollow portion 110 may be provided inside the housing portion 100 and formed in a hollow shape with a predetermined length. The piston portion 200 may be movably accommodated in the hollow portion 110.

The hollow portion 110 may guide a linear movement of a piston body portion 210. An outer surface of the housing portion 100 (left in FIG. 6) may have an opening portion that communicates with the hollow portion 110. The hollow portion 110 may be formed as a cylindrical groove.

The hollow portion 110 may include a first hollow portion 111 and a second hollow portion 112 having a smaller inner diameter than the first hollow portion 111. Accordingly, a stepped portion 110a that is bent toward the inside of the housing portion 100 may be formed between the first hollow portion 111 and the second hollow portion 112. The elastic portion 300 may be seated on the stepped portion 110a.

The solid portion 120 may be provided inside the housing portion 100 and be provided on one side of the hollow portion 110 (right in FIG. 6). The solid portion 120 may be formed in a solid shape with a predetermined length.

The solid portion 120 may be positioned inside the second hollow portion 112. The solid portion 120 may have a smaller diameter than the second hollow portion 112.

The solid portion 120 may support the damper portion 400, allowing the damper portion 400 to be compressed by the pressure of the piston portion 200. The cushioning member 500 may be coupled to the solid portion 120. The solid portion 120 may have a seating portion 120a. The seating portion 120a may be formed as a recessed groove in an outer surface of the solid portion 120, oriented toward the piston portion 200.

The guide portion 130 may be provided inside the housing portion 100 and outside the solid portion 120. In addition, the guide portion 130 may be formed between the inner circumferential surface of the second hollow portion 112 and the outer circumferential surface of the solid portion 120, and formed along the circumferential direction of the second hollow portion 112 and the solid portion 120.

The guide portion 130 may communicate with the first hollow portion 111. A piston rod portion 230 may be inserted into the guide portion 130. The guide portion 130 may guide a linear movement of the piston rod portion 230.

The housing portion 100 may be detachably coupled to the pedal portion 10 such as a pendant-type pedal portion and organ-type pedal portion. The housing portion 100 may have the bracket portion 150 coupled to the pedal portion 10. The bracket portion 150 may be formed to protrude from an outer surface of the housing portion 100. A plurality of the bracket portions 150 may be spaced apart on the housing portion 100.

The bracket portion 150 may have a hole portion 151. The hole portion 151 may be formed to pass through the bracket portion 150 in the thickness direction. The bracket portion 150 may be coupled to a coupling hole, formed in the pedal portion 10, using the coupling member 20 such as a bolt and a nut, so that the housing portion 100 may maintain a stable connection to the pedal portion 10 and prevent rotation of the housing portion 100.

The housing portion 100 may further include a sensor portion 140. The sensor portion 140 may be mounted on an outer surface of the housing portion 100. The sensor portion 140 may be electrically coupled to a control portion (not shown) of the vehicle, and may sense the position of a magnet portion 240.

The piston portion 200 may be slidably positioned in the housing portion 100. The piston portion 200 may include the piston body portion 210, a piston pressing portion 220, and the piston rod portion 230.

The piston body portion 210 may be positioned inside the housing portion 100. The piston body portion 210 may be accommodated in the hollow portion 110. In addition, the piston body portion 210 may be movably accommodated in the first hollow portion 111. The piston body portion 210 may be formed in a plate shape.

The piston body portion 210 may have a spherical ball portion 211. The ball portion 211 may be formed to protrude from an outer surface of the piston body portion 210 facing the piston pressing portion 220. A socket portion 221 of the piston pressing portion 220 may be coupled to the ball portion 211.

The piston body portion 210 may have a protrusion portion 210a. The protrusion portion 210a may be formed to protrude from an outer surface of the piston body portion 210, oriented toward the solid portion 120. The protrusion portion 210a may be positioned at a central portion of the piston body portion 210. The damper portion 400 may be interference-fitted onto the protrusion portion 210a.

The piston pressing portion 220 may be mounted on the piston body portion 210. In addition, the piston pressing portion 220 may be mounted on the ball portion 211. The piston pressing portion 220 may be exposed through an opening portion of the housing portion 100. The piston pressing portion 220 may move in one direction (right in FIG. 6) when an external force is applied.

The piston pressing portion 220 may be pivotably coupled to the piston body portion 210 using a joint mechanism. In addition, the socket portion 221 provided on the piston pressing portion 220 may be pivotably coupled to the ball portion 211 provided on the piston body portion 210.

The piston body portion 210 may be caulk-coupled to the piston pressing portion 220. For example, by pressing and caulking an opening portion of the socket portion 221 toward the piston body portion 210, the piston pressing portion 220, which is moved by an external force, may maintain a state of pivotable connection to the ball portion 211. The piston body portion 210 may be caulked to the piston pressing portion 220, which may reduce assembly time and costs.

The piston rod portion 230 may be provided on one side (right in FIG. 6) of the piston body portion 210. In addition, the piston rod portion 230 may be formed on an outer surface of the piston body portion 210, oriented toward the solid portion 120.

The piston rod portion 230 may be movably accommodated in the hollow portion 110. The piston body portion 210 may have a larger diameter than the piston rod portion 230.

The piston rod portion 230 may have an opening portion 230a at an end portion oriented toward the solid portion 120 (right in FIG. 6) and may be formed in a hollow shape. The piston rod portion 230 may be formed in a cylindrical shape with a predetermined length. The damper portion 400 may be mounted on the piston rod portion 230.

The piston portion 200 may have the magnet portion 240. The magnet portion 240 may be provided on an outer circumferential surface of the piston body portion 210. The magnet portion 240 may be integrally provided on the piston body portion 210 through insert injection molding with the piston body portion 210.

The magnet portion 240 may be formed along the circumferential direction of the piston body portion 210. Accordingly, the position of the magnet portion 240 may be sensed regardless of the mounting position of the sensor portion 140 mounted on the housing portion 100.

The magnet portion 240 may measure position information of the piston portion 200. The magnet portion 240 is a magnet with magnetic force and may move along with the piston portion 200, thus transmitting pedal force applied by the piston portion 200 or position information of the piston portion 200 to the vehicle's control portion through the sensor portion 140, using changes in the magnetic field.

The elastic portion 300 may elastically support the piston portion 200 inside the housing portion 100. In addition, the elastic portion 300 may elastically support the piston portion 200 in the hollow portion 110.

The elastic portion 300 may come into contact with the inner surface of the hollow portion 110 on one side (right in FIG. 6), and come into contact with the outer surface of the piston body portion 210 on the opposite side (left in FIG. 6). In addition, one side of the elastic portion 300 may be seated on the stepped portion 110a, and the opposite side may be seated on the outer surface of the piston body portion 210. The elastic portion 300 may provide an elastic force to the piston body portion 210, which is moved by an external force applied to the piston pressing portion 220.

The elastic portion 300 may be compressed by the piston body portion 210, which is moved by the external force applied to the piston pressing portion 220 between the piston body portion 210 and the stepped portion 110a.

The compressed elastic portion 300 may provide an elastic force (elastic restoring force) to the piston body portion 210, thereby returning the piston body portion 210 to original position thereof. The elastic portion 300 may include a coil spring that surrounds the circumference of the piston rod portion 230.

The damper portion 400 may be provided in the piston portion 200. The damper portion 400 may be accommodated inside the piston rod portion 230. A gap may be formed between the inner circumferential surface of the piston rod portion 230 and the outer circumferential surface of the damper portion 400. The damper portion 400 may be coupled to the inside of the piston rod portion 230 through the opening portion 230a of the piston rod portion 230.

The damper portion 400 may include an elastically deformable material. The elastically deformable material for the damper portion 400 may include rubber, silicone, plastic, and the like.

The damper portion 400 may be formed as a hollow cavity. Opening portions that communicate with the internal space of the damper portion 400 may be provided on both end portions of the damper portion 400, respectively. The protrusion portion 210a that protrudes from the outer surface of the piston body portion 210 may be pressed into the opening portion on one side of the damper portion 400, thereby securing the damper portion 400 inside the piston rod portion 230.

An end portion of the damper portion 400 may be hidden or exposed through the opening portion 230a of the piston rod portion 230.

The damper portion 400 may move along with the piston portion 200 and be elastically deformed according to the movement of the piston portion 200. The damper portion 400 may be supported on the solid portion 120 and compressed according to the movement direction of the piston portion 200.

When the piston rod portion 230 moves toward the solid portion 120 due to the external force applied to the piston pressing portion 220, the damper portion 400 may be supported on the solid portion 120. When the piston rod portion 230 is inserted into the guide portion 130, the damper portion 400 may be compressed between the piston body portion 210 and the solid portion 120.

The cushioning member 500 may be provided in the housing portion 100. The cushioning member 500 may be coupled to the solid portion 120. The cushioning member 500 may be interference-fitted inside the seating portion 120a formed on an outer surface of the solid portion 120.

The cushioning member 500 may protrude from the seating portion 120a. The cushioning member 500 may be spaced apart from the damper portion 400 and positioned to face the damper portion 400. The cushioning member 500 may have a larger diameter than the damper portion 400. The central axis of the cushioning member 500 may align with the central axis of the damper portion 400.

The cushioning member 500 may include an elastically deformable material. The cushioning member 500 may be made of materials such as sponge and wool. The cushioning member 500 may be compressed by the pressure of the damper portion 400.

The cushioning member 500 may be positioned between the solid portion 120 and the damper portion 400 and absorb the impact applied to the solid portion 120 as the damper portion 400 comes into contact with the solid portion 120.

The damper portion 400 and the cushioning member 500 may have different hardnesses. The cushioning member 500 may have a lower hardness than the damper portion 400. In addition, the cushioning member 500 may be made of a softer material than the damper portion 400.

When the damper portion 400 applies pressure to the cushioning member 500, the damper portion 400 may not be compressed and deformed by the elastic force of the cushioning member 500. The cushioning member 500 may be compressed and deformed by the pressure of the damper portion 400.

The damper portion 400 may not be compressed and deformed until the compression limit of the cushioning member 500 is reached, and the damper portion 400 may be compressed and deformed after the cushioning member 500 reaches the compression limit and the damper portion 400 is supported on the solid portion 120.

The pedal simulator 1 of a vehicle according to the embodiment of the present disclosure may further include a retainer portion 600.

The housing portion 100 may have a slit hole portion 101. The slit hole portion 101 may be formed through an outer circumferential surface of the housing portion 100. The slit hole portion 101 may include a first slit hole portion 101a, and a second slit hole portion 101b positioned on the opposite side of the first slit hole portion 101a.

The retainer portion 600 may be formed in a ring shape with one side open. The retainer portion 600 may pass through the first slit hole portion 101a, and the free end of the retainer portion 600 may be inserted into the inside of the second slit hole portion 101b, so that the retainer portion 600 may be coupled to the housing portion 100.

The retainer portion 600 may interfere with the piston pressing portion 220 to prevent axial separation of the piston portion 200 through the opening portion of the housing portion 100.

The operation process of the pedal simulator of a vehicle according to an embodiment of the present disclosure with the above-described configuration will be described below.

FIG. 7 is an operational cross-sectional view showing an initial braking of a pedal simulator of a vehicle according to an embodiment of the present disclosure.

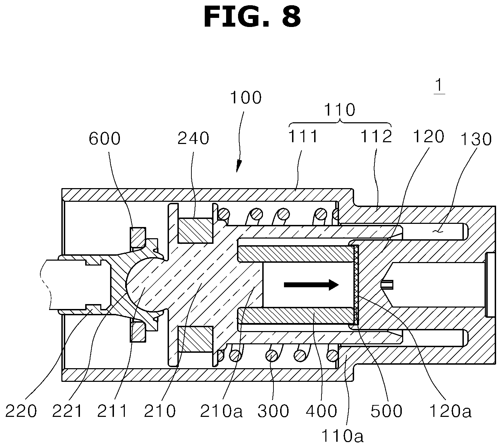

FIG. 8 is an operational cross-sectional view showing a mid-to-late braking of a pedal simulator of a vehicle according to an embodiment of the present disclosure.

Referring to FIG. 7, when the piston pressing portion 220 is pressed by an external force, the piston rod portion 230 moves toward the solid portion 120 along with the piston body portion 210.

As the piston body portion 210 moves, the elastic portion 300 is compressed and deformed by the pressure of the piston body portion 210, and the damper portion 400 comes into contact with the cushioning member 500. When the elastic portion 300 is compressed, a driver may notice an initial brake feel.

The position of the magnet portion 240, which is moved by the piston portion 200, is sensed by the sensor portion 140. The sensor portion 140 transmits the position information or pedal force information of the piston portion 200 to the vehicle's control portion according to changes in the magnetic field.

Referring to FIG. 8, when an external force is continuously applied to the piston pressing portion 220, the elastic portion 300 is further compressed, and the piston rod portion 230 is inserted into the guide portion 130. At the same time, the damper portion 400, which moves along with the piston rod portion 230, applies pressure to the cushioning member 500, so that the cushioning member 500 is compressed, and the damper portion 400 is compressed while being supported on the solid portion 120. When the elastic portion 300 and the damper portion 400 are compressed together, a driver may notice a mid-to-late brake feel.

The position of the magnet portion 240, which is moved by the piston portion 200, is sensed by the sensor portion 140. The sensor portion 140 transmits the position information or pedal force information of the piston portion 200 to the vehicle's control portion according to changes in the magnetic field. When the external force applied to the piston pressing portion 220 is released, the compressed elastic portion 300 provides an elastic force (elastic restoring force) to the piston body portion 210, thereby returning the piston body portion 210 to original position thereof.

The pedal simulator 1 of a vehicle according to the embodiment of the present disclosure improves the inconsistent brake feel during the transition from the elastic portion 300 compression stage to the damper portion 400 compression stage through the cushioning member 500, which is compressed by the pressure of the damper portion 400, thus ensuring a smooth brake feel.

The pedal simulator 1 of a vehicle according to the embodiment of the present disclosure may adjust pedal force based on the density and thickness of the cushioning member 500.

The pedal simulator 1 of a vehicle according to the embodiment of the present disclosure enables standardization across various types of pedal portions 10 through modularization that can be applied regardless of the type and shape of the pedal portion 10, thereby reducing repair and replacement costs of the pedal simulator 1 and improving productivity.

The pedal simulator 1 of a vehicle according to the embodiment of the present disclosure may eliminate the need for a pedal return spring, as the elastic portion 300 elastically supports the piston portion 200.

The pedal simulator 1 of a vehicle according to the embodiment of the present disclosure is capable of measuring a pedal stroke using the magnet portion 240, which is integrally provided on the piston portion 200.

The pedal simulator 1 of a vehicle according to the embodiment of the present disclosure may adjust pedal force based on the length, outer diameter, and hardness of the housing portion 100, elastic portion 300, and damper portion 400.

Although embodiments of the present disclosure have been described with reference to the accompanying drawings, these embodiments are for illustrative purposes only, and those skilled in the art will appreciate that various modifications and other equivalent embodiments can be made from these embodiments disclosed herein. Thus, the true technical scope of the disclosure should be defined by the following claims.

## Claims

1. A pedal simulator of a vehicle comprising:
a housing portion;
a piston portion slidably positioned in the housing portion;
an elastic portion configured to elastically support the piston portion inside the housing portion;
a damper portion provided in the piston portion and configured to be elastically deformable according to movement of the piston portion; and
a cushioning member provided in the housing portion, positioned to face the damper portion, and compressed by pressure of the damper portion.

2. The pedal simulator of the vehicle of claim 1, wherein
the piston portion includes:
a piston body portion positioned inside the housing portion and configured to have a ball portion;
a piston pressing portion provided on one side of the piston body portion and configured to have a socket portion pivotably coupled to the ball portion; and
a piston rod portion provided on an opposite side of the piston body portion and configured to have the damper portion mounted.

3. The pedal simulator of the vehicle of claim 2, wherein the piston rod portion has an opening portion at an end portion at one side and is formed in a hollow shape, and the damper portion is accommodated in the piston rod portion.

4. The pedal simulator of the vehicle of claim 2 or 3, wherein
the housing portion includes:
a hollow portion wherein the piston portion is movably accommodated;
a solid portion provided on one side of the hollow portion, configured to have the cushioning member coupled, and to support the damper portion, allowing the damper portion to be compressed by pressure of the piston portion; and
a guide portion formed outside of the solid portion, configured to communicate with the hollow portion, and to have the piston rod portion inserted.

5. The pedal simulator of the vehicle of any one of claims 1 to 4, wherein the cushioning member includes an elastically deformable material.

6. The pedal simulator of the vehicle of any one of claims 1 to 5, wherein the damper portion and the cushioning member have different hardnesses.

7. The pedal simulator of the vehicle of any one of claims 2 to 6, wherein the piston body portion has a larger diameter than the piston rod portion.

8. The pedal simulator of the vehicle of any one of claims 2 to 7, wherein the elastic portion comes into contact with an inner surface of the hollow portion on one side, comes into contact with an outer surface of the piston body portion on an opposite side, and provides an elastic force to the piston body portion.

9. The pedal simulator of the vehicle of any one of claims 2 to 8, wherein the housing portion has a slit hole portion, and further comprises a retainer portion configured to pass through the slit hole portion, be coupled to the housing portion, and interfere with the piston pressing portion to prevent the piston portion from separating.

10. The pedal simulator of the vehicle of claim 9, wherein the retainer portion is formed in a ring shape with one side open.

11. The pedal simulator of the vehicle of any one of claims 2 to 10, wherein
the piston portion further includes
a magnet portion provided on an outer circumferential surface of the piston body portion and formed along a circumferential direction of the piston body portion.

12. The pedal simulator of the vehicle of claim 11, further comprising
a sensor portion provided in the housing portion and configured to sense a position of the magnet portion.

13. A pedal simulator of a vehicle, the pedal simulator comprising:
a housing portion detachably coupled to a pedal portion;
a piston portion slidably positioned in the housing portion;
an elastic portion configured to elastically support the piston portion inside the housing portion;
a damper portion provided in the piston portion and configured to be elastically deformable according to movement of the piston portion; and
a cushioning member provided in the housing portion, positioned to face the damper portion, and compressed by pressure of the damper portion.

14. The pedal simulator of the vehicle of claim 13, further comprising
a bracket portion provided in the housing portion and coupled to the pedal portion.

15. The pedal simulator of the vehicle of claim 13 or 14, wherein a plurality of the bracket portions is spaced apart on an outer surface of the housing portion.
